# EUROPÄISCHE PATENTSCHRIFT

(11) **EP 0 345 503 B1**
(45) Veröffentlichungstag und Bekanntmachung des Hinweises auf die Patenterteilung: **21.04.1993**
(21) Anmeldenummer: 89108986.4
(22) Anmeldetag: 18.05.1989
(51) Int. Cl.: B65G 63/02

(54) **Anlage zum Bewegen von sperrigen Gegenständen**
Installation for moving bulky objects
Installation pour déplacer des objets volumineux

(30) Priorität: 10.06.1988 HU 299888; 14.07.1988 HU 367688
(43) Veröffentlichungstag der Anmeldung: 13.12.1989
(73) Patentinhaber: INART MERNÖKI ES MÜVESZETI SZOLGALTATO KISSZÖVETKEZET, H-1122 Budapest (HU)
(72) Erfinder: Viragh, Lajos, Dipl.-Ing., H-1111 Budapest (HU); Viragh, Eva, H-1111 Budapest (HU); Moldovan, Kristúf, Dipl.-Ing., H-1121 Budapest (HU)
(74) Vertreter: Viering, Jentschura & Partner

(56) Entgegenhaltungen:
- DE-A- 2 440 682
- GB-A- 265 325
- GB-A- 2 174 966
- US-A- 3 592 333

## Beschreibung

Die Erfindung betrifft eine Anlage bzw. ein System zum Bewegen und/oder Rangieren von sperrigen Gegenständen bzw. Kontainern oder Fahrzeugen mit Hilfe von Rollen bzw. Rollenbahnen. Eine solche Anlage bzw. ein solches System ist bereits durch die DE-A1-2 440 682 bekannt.

Bekanntlich hält das Aufladen bzw. Verladen von Eisenbahn-und Straßenfahrzeugen mit der Verbreitung zeitgemäßer. Technologien und auch mit dem Tempo der Entwicklung der Fahrzeuge keineswegs Schritt.

Der Warentransport verlagerte sich in den vergangenen dreißig Jahren auf das Gebiet des Straßenverkehrs, wobei Volumen und auch Tonne per Kilometerleistung der Eisenbahnförderung von Jahr zu Jahr zurückgingen. Der Anteil der Warenförderung durch Straßenlastzüge und innerhalb dieser durch Sattelanhängerkontainer nimmt von Jahr zu Jahr zu. Zu den Vorteilen des Straßentranssports gehören nämlich die kurzen Transportzeiten, die geringere Zahl von Transportschäden und die von Haus zu Haus ohne Umschlag erfolgende Förderung.

Nachteile des Straßentransports der Waren sind zugleich jedoch die größeren Aufwendungen an Energie und lebendiger Arbeit, die erhöhte Umweltverunreinigung, die höheren Kosten und die umfangreicheren Verwaltungsarbeiten sowie das schwierigere Verladen und der Umstand, daß zu einem zuverlässigen Transport die adäquate Instandhaltung und Entwicklung des Straßennetzes erforderlich ist.

Bei einem Vergleich der Vorteile und der Nachteile verlieren die zu Beginn in den Vordergrund getretenen Vorteile in letzter Zeit viel an ihrer Attraktivität. Die Ursache dieses Umstandes ist darin zu sehen, daß der angestiegene und ununterbrochen sich erhöhende Verkehr eine Verlangsamung der Förderung mit sich bringt. Besonders gilt dies im internationalen Straßenzug- und Kontainerverkehr, da das Passieren der Straßengrenzübergänge von Jahr zu Jahr längere Wartezelten bedingt. In einem großen Tempo steigen die Kosten und auch die Belastung der Straßen.

Es kann mit einer erneuten Zunahme der Vorteile der Eisenbahnförderung gerechnet werden, sofern die Probleme des Verladens und des Kontainerrangierens gelöst werden können.

Bekanntlich gehören in den Begriffskreis der Transkontainer bzw. Großkontainer die den internationalen Normen entsprechenden laufwerklosen Transportbehälter.

Nachteil der zur Zeit bekannten Kontainer verwendenden Warentransportsysteme ist, daß die zum Einsatz gelangenden technischen Mittel aussetzend arbeiten und im Verlaufe ihres Einsatzes - eben wegen der im Leerlauf erfolgenden Zurückbewegung - mit einem großen Kapazitätsausfall zu rechnen ist. Kräne eignen sich nämlich insbesondere zur Erfüllung von Hebeaufgaben, wobei zu einer auf längere Entfernungen erfolgenden waagerechten Transportbewegung der Betrieb kostenaufwendig und schwerfällig ist. Hebe- und Transportfahrzeuge sind technisch kompliziert und deshalb sowohl in ihrer Anschaffung als auch in ihrem Betrieb kostenaufwendig.

Ein welterer Nachteil der zur Zeit bekannten und verwendeten Kontainertransportsysteme besteht darin, daß die zum Bewegen der Kontainer vorgesehenen technischen Ausrüstungen sich nicht elastisch an das Volumen der zu bewegenden Kontainer anpassen und auch an Stellen mit zu geringem Verkehr ähnliche Ausrüstungen bereitgestellt werden müssen wie an den die Kapazitätsgrenzwerte der eingesetzten Mittel nahezu ausnützenden Stellen mit größerem Verkehr.

Ein weiteres Problem bedeutet, daß die zur Zeit eingesetzten Mittel keine Automatisierung der Materialtransportaufgaben der verschiedenen Kontainerlader-, Umlader und der -terminale ermöglichen.

Bei einer weitgehenden Vereinfachung der Ausführungslösungen des Verladens, Umschlages und Rangierens von Gütern im allgemeinen könnte man sagen: auf einer "passiven" Bahn (Straße, Platz, Ladefläche usw.) bewegen sich "aktive" Güter bzw. Fahrzeuge. Ihr Bewegen kann aus eigener Kraft (Karren, Wagen, Kontainer mit Laufwerken usw.) erfolgen. Kennzeichnen für das Bewegen ist das von der passiven Bahn erfolgende Anheben (im allgemeinen ein Anheben von einem äußeren Punkt) und der angehoben erfolgende Transport.

Auch die modernsten Systeme sind jedoch nicht in der Lage, die Leerläufe zu beseitigen und die jeweilige Stellung der bewegten Einheiten in Evidenz zu halten.

Ähnliche Probleme bringt auch das Parken in Großstädten. Der Bau von Garagen bzw. Hoch und Tiefgaragen hält mit dem Anstieg des Kraftverkehrs keineswegs Schritt. Wegen der hohen Baukosten, des großen Platzbedarfes und des schwerfälligen Betriebes werden deren wenig gebaut. Aus den hohen Kosten resultierend sind auch die Parkgebühren hoch.

Die bisher gebauten Parkgaragen wurden aus herkömmlichen Bauelementen (Stahlkonstruktion, Beton, Ziegelsteine usw.) errichtet. Zur Ein- und Ausfahrt der Kraftwagen sowie zum Verkehr zwischen den einzelnen Etagen dienten Rampen und Verkehrswege mit einem großen Platzbedarf. Die Bewegungen zwischen den einzelnen Etagen sowie innerhalb der einzelnen Etagen werden fallweise durch den Kraftwagen selbst vollführt. Dies ist außerordentlich schwerfällig, das Manövrieren erfordert viel Platz und besonders ausgebildete Kraftfahrer. Wegen der Abgase ist eine hohe Leistung erfordernde Lüftung und die Einhaltung strenger Brandschutzvorschriften erforderlich.

Ein weiterer Nachteil der herkömmlichen Parkgaragen besteht weiterhin darin, daß sie im Vergleich zu ihren großen Abmessungen nur die Aufnahme einer geringen Zahl von Kraftfahrzeugen wegen des großen Platzbedarfes der Verkehrswege ermöglichen. Aus all diesen Gründen eignen sie sich keineswegs zur Lösung der Parkflächenprobleme in Großstädten.

Zweck der vorliegenden Erfindung ist es deshalb, eine Anlage bzw. ein System zu schaffen, wodurch sperrige Objekte, z.B. Kontainer oder Kraftfahrzeuge mit Hilfe von Rollen bzw. Rollenbahnen nicht nur bei einem den herkömmlichen wesentlich unterschreitenden Platzbedarf einfacher und schneller als in herkömmlichen Ausführungslösungen bewegt bzw. rangiert werden können, sondern zugleich auch das Verfolgen und Registrieren der im System bewegten Objekte vom Augenblick ihres Eintrittes bis zu ihrem Austritt automatisch zweckdienlicherweise mit Hilfe eines rechnergestützten Systems ermöglicht werden kann.

Die gestellte Aufgabe wurde erfindungsgemäß dadurch gelöst, daß die Rollen in einer derartigen Weise in rechteckigen Feldern angeordnet werden, daß hierbei die in den einzelnen Feldern befindlichen Rollen parallel zueinander, mit den in den benachbarten Feldern befindlichen Rollen hingegen einen Winkel einschließend und in den einzelnen Feldern in senkrechter Richtung beweglich angeordnet sind.

Zumindest ein Teil der in den einzelnen Feldern befindlichen Rollen können mit selbständigem Getriebe oder mit einem gemeinsamen Antrieb zum Beispiel einem Kettentrieb versehen sein.

Das erfindungsgemäße Rollensystem kann als ein Rangierbahnhof oder ein Kraftfahrzeugparkplatz gegebenenfalle als eine einfache Verladestelle ausgeführt sein.

Im allgemeinen sind die Felder nebeneinander angeordnet und die darin befindlichen Rollen liegen senkrecht zueinander. Gegebenenfalls, besonders wenn verhältnismäßig kleine Abmessungen und Gewichte aufweisende Objekte, zum Beispiel Personenwagen bewegt werden müssen, kann es zweckdienlich sein, die in verschiedenen Richtungen angeordneten Rollen enthaltenden Felder ineinanderzuschieben, d.h. so anzuordnen, daß die in verschiedenen Richtungen liegenden Rollen nebeneinander angeordnet werden, wobei jedoch die in gleicher Richtung liegenden Rollen mit einem gemeinsamen Antrieb versehen und gemeinsam angehoben bzw. abgesenkt werden können. Die einzelnen Felder können im allgemeinen mit Lelt-und/oder Anschlagelementen versehen sein, um die zu bewegenden Objekte genauer führen zu können.

Ist die Anlage als ein Rangierbahnhof ausgebildet, enthält sie vorzugsweise einen Verladeraum für Straßenfahrzeuge, einen für die Eisenbahn sowie einen Rangierbereich und einen Lagerbereich.

In der Randzone der Verladeräume für Straßenfahrzeuge und/oder Eisenbahnfahrzeuge sind gegebenenfalls ausschließlich eine zu der Rampe parallele Achslinie aufweisende Rollenbahnen ausgebildet. Mindestens ein Teil derselben kann senkrecht zur Rampe aus der Rampe herausgeschoben werden, um auf die mit Rollenbahnen nicht versehenen Fahrzeuge die zu bewegenden Objekte hinüberschieben zu können. Gegebenenfalls sind die Rollenbahnen unter den auf der Rampe befindlichen Feldern herausschiebbar und in senkrechter Richtung verstellbar angeordnet.

Die Anlage ist zweckdienlicherweise mit zusätzlichen Zuführungs- bzw. Ableitungsrollenbahnen versehen. Diese Rollenbahnen können auf der Rampe oder auf der Fahrzeugpritsche (Plattform) angeordnet sein. Gegebenenfalls können auch mobile selbständige Rollenbahnen eingesetzt werden, die für die Zeitdauer des Verladens auf die Rampe oder die Fahrzeuge aufgesetzt werden können. Derartige zum Verladen dienende Rollenbahnen sind in diesem Falle mit einer ebenen unteren leicht gleitenden Abdeckfläohe versehen.

Wenn die untere Fläche der zu bewegenden Gegenstände, zum Beispiel Kontainer, nicht eben ist, können auch ebene Ladeplatten verwendet werden. In diesem Falle wird das zu bewegende Objekt auf den Ladeplatten befestigt, um die Bewegung mittels der Rollenbahn möglichzumachen.

Offensichtlich ist es zweckmäßig, das erfindungsgemäße System mit einer rechnergestützten Steuerung bzw. einem die Waren verfolgenden und/oder zu Evidenz haltenden System zu versehen, wodurch die Möglichkelt geschaffen wird, die genaue Stelle der im System bewegten Objekte zu jeder Zeit festzustellen und die Objekte auf die gewünschte Weise automatisch an die entsprechende Stelle befördern zu können.

Die weiteren Einzelheiten der Erfindung werden anhand von Ausführungsbeispielen mit Hilfe von Zeichnungen beschrieben. Auf dar Zeichnung zeigt
Fig. 1 die Draufsicht einer als Rangierbahnhof zusammengestellten Ausführungsform der erfindungsgemäßen Anlage bzw. Vorrichtung,
Fig. 2 die über die in den einzelnen Feldern der Anlage befindlichen Rollen erfolgenden Bewegungsrichtungen,
Fig. 3 die Schnittzeichnung eines Feldes der Anlage,
Fig. 4 die perspektivische Zeichnung der in Fig. 1 dargestellten Anlage,
Fig. 5 die Draufsicht einer anderen Ausführungsform der erfindungsgemäßen Anlage,
Fig. 6 die Seitenansicht eines an die erfindugsgemäße Anlage angepaßten Fahrzeuges,
Fig. 7 die Draufsicht der Pritsche (Plattform) des in Fig, 6 dargestellten Fahrzeuges
Fig. 8 die Seitenansicht eines mit der erfindungsgemäßen Anlage verwendbaren Eisenbahnwagens,
Fig. 9 die Draufsicht des Eisenbahnwagens nach Fig. 8,
Fig. 10 die Vorderansicht des in Fig. 8 und Fig. 9 dargestellten Eisenbahnwagens,
Fig. 11 die Seitenansicht der zusätzlichen, mit der er findungsgemäßen Anlage verwendeten Ladeplatte und eines Kontainers,
Fig. 12 die Vorderansicht einer mit der Anlage verwendeten rollenbestückten Ladeplatte,
Fig. 13 die Seitenansicht der in Fig. 12 dargestellten rollenbestückten Ladeplatte, und
Fig. 14 die skizzierte Draufsicht zweier ineinandergeschobener Rollenfelder.

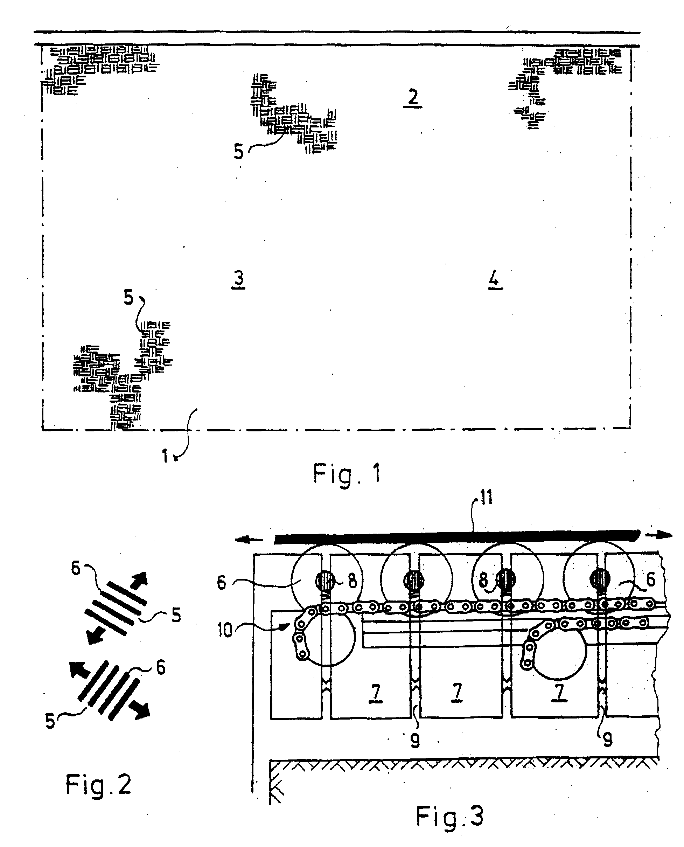

In Fig. 1 ist eine Ausführungsform des erfindungsgemäßen Systems zu sehen, die als Rangierbahnhof bzw. Kontainerrangierfläche ausgebildet ist. Die Fläche besteht aus dem Rangierbereich für Straßenfahrzeuge 1, dem Rangierbereich für die Eisebahn 2, dem Rangierbereich 3 und dem Lagerungsbereich 4. Auf dem Rangierbereich 3 ist eine Hubvorrichtung angeordnet, um die zu rangierenden Kontainer nötigenfalls aufeinanderstapeln zu können.

Das ganze Gebiet besteht aus in den Feldern 5 angeordneten Rollen 6. Aus Fig. 2 ist zu ersehen, daß die in den einzelnen Feldern befindlichen Rollen 6 parallel zueinander angeordnet sind und daß die in den benachbarten Feldern 5 befindlichen Rollen bei der dargestellten Ausführungslösung zueinander senkrechte Achslinien aufweisen. Dementsprechend können auf den in den einzelnen Feldern 5 befindlichen Rollen 6 angeordneten Objekte in der Richtung der in Fig. 2 dargestellten Pfeile bewegt werden.

Um die Bewegung durchführen zu können, sind die einzelnen Felder 5 in senkrechter Richtung beweglich und mit einem Antrieb versehen. So werden, wenn man das auf den in Fig. 2 sichtbaren Feldern angeordnete Objekt aufwärtsbewegen will, das obere Feld sowie die die sich mit diesem in einer Richtung bewegenden Rollen enthaltenden Felder auf der Ebene des Systems angehoben, wobei dann das über den Feldern befindliche Objekt nur auf den Rollen in der gegebenen Richtung aufliegen wird und bei einer Bewegung, d.h einem Umlauf der Rollen, sich in der zur Rollenachse senkrechten Richtung bewegen wird.

Will man jedoch die Bewegung der Rollen in der anderen Richtung vornehmen, so werden die vorgenannten Felder wieder in ihre ursprüngliche Stellung abgesenkt und die die zu diesen senkrecht angeordneten Rollen enthaltenen Felder angehoben. Hierbei werden die Objekte auf diesen Rollen aufliegen und in einer zur Achse der Rollen senkrechten Richtung sich weiterbewegen.

In Fig. 3 ist die Schnittzeichnung eines Teiles des Feldes zu sehen. Die Rollen 6 sind in Rahmenelementen 7 gelagert und zwar auf eine Weise, daß die Achsen 8 in den zwischen den Rahmenelementen 7 befindlichen Nuten eingefügt sind. Auf diese Weise können die Rollen 6 zweckdienlicherweise auf hydraulischem oder pneumatischem Wege aufeinmal angehoben bzw. abgesenkt werden. Den Antrieb der Rollen 6 versieht der Kettentrieb 10. In der angehobenen Stellung der Rollen 6 kann die untere Ebene 11 des auf ihnen befindlichen Objekts in der Richtung der in der Abbildung dargestellten Pfeile bewegt werden.

Die einzelnen Felder können entlang ihrer Ränder mit derartigen Leit- und/oder Anschlagelementen versehen werden, die ebenfalls aus der Ebene der Felder herausgehoben werden können und die Führung bzw. den Anschlag der zu bewegenden Objekte sichern.

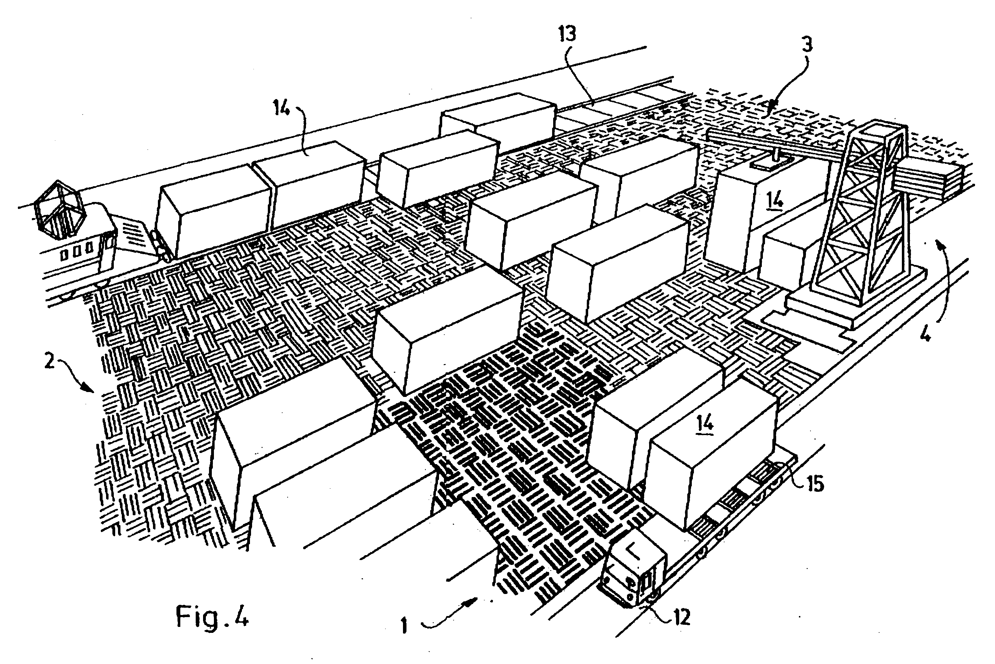

In Fig. 4 ist das perspektivische Bild einer zu der in Fig. 1 dargestellten ähnlichen Kontainerrangieranlage zu sehen. Hier sind die einzelnen Felder 5 mit den in einer Richtung angeordneten Rollen 6 ausführlich dargestellt. An den zu beiden Seiten der Rangierfläche 3 befindllchen Verladeraum können von der einen Seite Kraftfahrzeuge 12, von der anderen Seite Eisenbahnwaggons 13 anlegen. Aus der Fig. ist zu ersehen, daß die Kontainer 14 mit Hilfe der Rollenbahn 15 von den Kraftfahrzeugen 12 auf die straßenseitige Verladefläche 1 gelangen. Die Rollenbahnen 15 sind an die Pritsche (Plattform) des Kraftfahrzeuges 12 montiert.

Die Kontainer 14 gelangen von der straßenseitigen Verladefläche 1 auf die Rangierfläche 3, von wo sie dann kontinuierlich den jeweiligen Erfordernissen entsprechend geordnet in Richtung der eisenbahnseitigen Verladefläche 2 bewegt werden und dann in der entsprechenden Reihenfolge auf die Eisenbahnwagen 13 befördert werden. Die Eisenbahnwagen 13 sind vorzugsweise mit den gleichen Rollenbahnen wie die Kraftfahrzeuge 12 versehen.

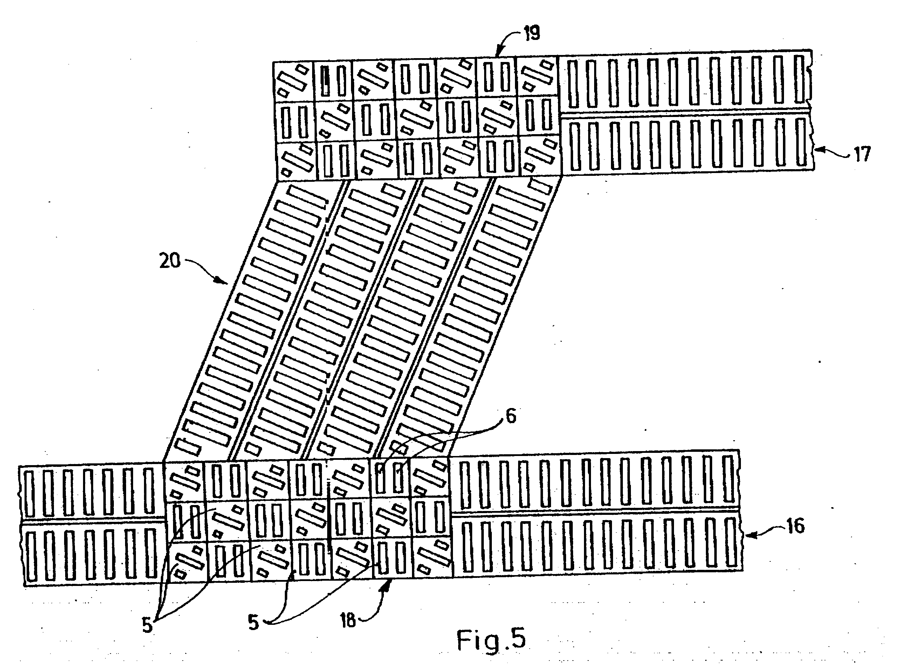

In Fig. 5 ist die Draufsicht einer anderen Ausführungsform der erfindungsgemäßen Einrichtung zu sehen. Die Fig. zeigt eine Kontainerumschlaganlage, bei der die untere Rollenbahn 16 der Verladebereich der eintreffenden Kontainer, die oben befindliche Rollenbahn 17 der Verladebereich der abgehenden Kontainer ist. Ein Teil beider Rollenbahnen 15 und 16 ist als eine Wendeeinheit 18 bzw. 19 ausgeführt und besteht aus im Vergleich zueinander in einem Winkel von ca. 45^{o} angeordnete Rollen 6 enthaltenden Feldern 5. Zwischen den beiden Wendeeinheiten 18 und 19 ist eine weitere Rollenbahn 20 angeordnet.

Von den auf der einen Seite der Rollenbahn 16 eintreffenden Fahrzeugen werden die Kontainer auf die Rollenbahn 16 ausgeladen, hiernach mit Hilfe der Wendeeinheit 18 und der Rollenbahn 20 zur Wendeeinheit 19 weitergeleitet und von hier erneut auf die andere Rollenbahn 17 weiter geführt und können dann auf das dort eintreffende Fahrzeug verladen werden.

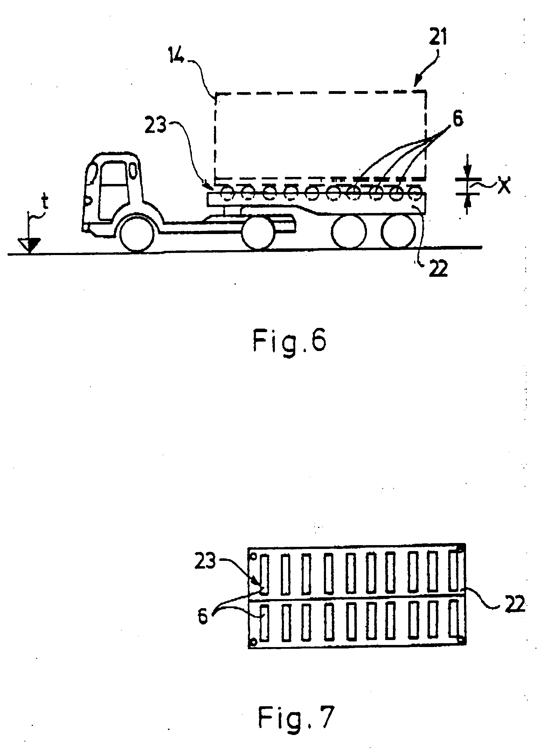

In den Fig. 6 - 10 sind Fahrzeuge dargestellt, die mit sich an die erfindungsgemäße Anlage anfügenden Rollenbahnen ausgerüstet sind.

Der in Fig. 6 und 7 dargestellte Kontainerstraßenzug 21 besitzt eine zur Aufnahme des Kontainers 14 dienende Plattform 22, die mit Rollenbahnen 28 ausgerüstet ist. Die Rollenbahnen 28 bildenden Rollen 6 sind in zwei nebeneinander liegenden Reihen und paarweise in einer Linie angeordnet. Die Rollen 6 sind angetriehene Rollen und können aus der oberen Ebene der Plattform 22 um einen Abstand X herausgehoben werden. In den Eckbereichen der Plattform 22 sind Eckenbefestigungsstellen vorgesehen, mit deren Hilfe der Kontainer 14 an der Plattform 22 befestigt werden kann.

Mit Rollenbahnen des Straßenzugkontainerfahrzeuges 21 kann der Kontainer 14 auf der in Draufsicht rechteckförmigen Plattform 22 auf den aus der Ebene der letztgenannten Plattform herausgehobenen Rollen 14 weiterbewegt werden. Zum Transport wird demgemäß der Kontainer 14 mittels der angetriebenen Rollenbahnen 23 auf die Plattform 22 gebracht und dann nach Zurücksenken der Rollen 6 der auf der Plattform 22 aufliegende Kontainer, an den Eckbefestigungsstellen fixiert, an seinen Bestimmungsort weiterbefördert. Der an dem Bestimmungsort eingetroffene Kontainer 14 wird auf der Plattform wieder festgemacht und die Rollenbahnen 23 werden in Betrieb gesezt, demzufolge der Kontainer 14 von dem Fahrzeug in Längsrichtung weiterbefördert werden kann.

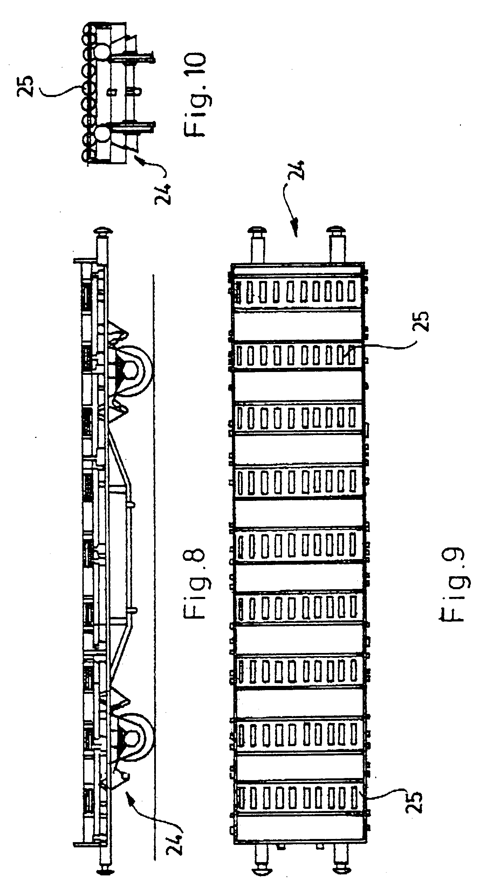

Der aus den Figuren 8-10 ersichtliche Eisenbahnwagen 24 ist mit ähnlichen Rollenbahnen 25 ausgerüstet. Hier sind aber die Rollenbahnen 25 nicht in der Längsrichtung des Fahrzeuges, sondern in seiner Querrichtung angeordnet. Ihre Arbeitsweise ist der auf der hervorgehenden Abbildung dargestellten gleich.

Mit Rücksicht darauf, daß nicht jeder Kontainer eine ebene Unterfläche aufweist, ist es in gewissen Fällen zweckdienlich, unter dem Kontainer ebene untere Flächen oder zumindest ebene untere Hüllflächen aufweisende Ladeplatten zu befestigen.

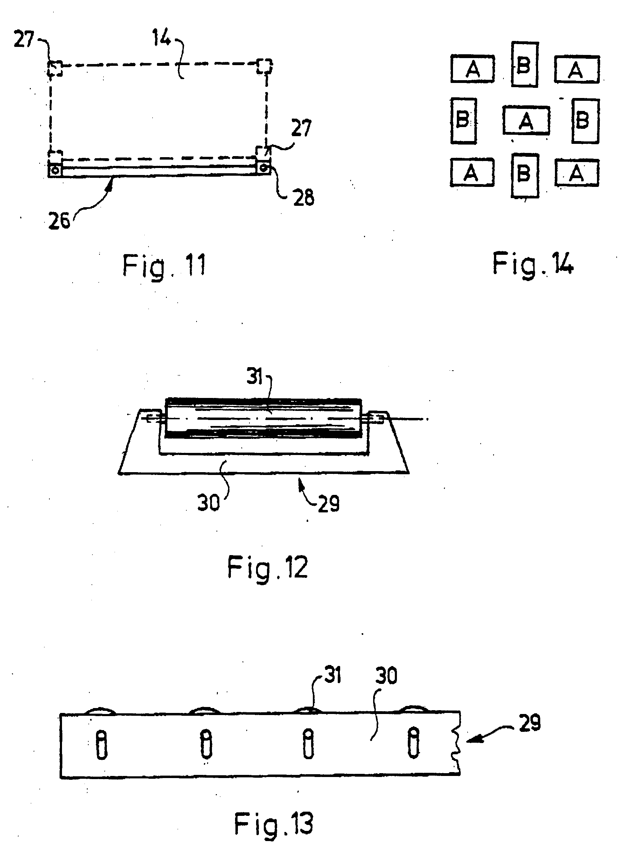

In den Fig. 11 und 12 ist ein mit unterbrochenen Linien gezeichneter Kontainer 14 zu sehen, der auf einer Ladeplatte angeordnet ist. Sich an die Eckelemente 27 des Kontainers anschließend ist die Ladeplatte 26 an ihren 4 Ecken mit gleichartigen Elementen 28 ausgerüstet. Die Form der Ladeplatte 26 stimmt in Draufsicht gesehen mit der waagerechten Projektion der genormten Kontainer 14 überein. Mit ihren aufeinander aufsitzenden Eckelementen 28 können je ein Kontalner 14 und je eine Laeplatte 26 lösbar aneinander befestigt werden, Die Ladeplatten 26 können aus einem beliebigen dem Zweck entsprechenden Material z.B. aus Metall, Holz, Kunststoff oder deren Kombination hergestellt werden. Ihr grundlegendes Merkmal besteht darin, daß ihre Unterflächen derartige ebene Flächen sind, die eine Beförderung belastet mit dem aufgesetzten und lösbar hefestigten Kontainer 14 auf der Rollenbahn ermöglichen.

Von dem Gesichtspunkt der vorliegende Erfindung ausgesehen, ist demgemäß nicht nur eine vollkommen homogene ebene Fläche, sondern z.B. auch die untere Seite eines durch mit ihrer unteren Fläche in einer gemeinsamen Ebene angeordnete Stäbe gebildeten Fachwerkes als "ebene" Fläche zu betrachten, das auf einer Rollenbahn bewegt werden kann. Derartige Fachwerke können z.B. sowohl nur in einer Richtung verlaufende zueinander parallele Stäbe, jedoch auch aus zueinander senkrechten Stäben bestehende Gitterwerke bilden.

Im ganzen Vorgang des Kontainertransportsystems bilden der Kontainer 14 und die an diesen angeschlossene Ladeplatte 26 eine Einheit, die - nötigenfalls - auch als ein ebener Kontainer allgemeiner Bestimmung angewandt werden kann. Das Maßsystem der Ladeplatten 26 stimmt mit dem der Kontainer überein. Ihre Eckelemente sind normgerecht und mit ihrer Hilfe können die Ladeplatten sowohl aneinander als auch an die Kontainer bzw. an das Transportfahrzeug angeschlossen werden und auch das Anheben kann an diesen Eckelementen erfolgen.

Natürlich ist keineswegs ausgeschlossen, daß die Kontainer selbst einen z.B. mit Verstärkungsrippen so ausgebildeten Boden besitzen, daß ihre untere Fläche eine ebene Fläche ist, sodaß der Transport der Kontainer auf der Rollenbahn auch auf diese Weise sichergestellt werden kann.

Die ebene Ladeplatte kann aus Modulelementen, Bauteilen zusammengestellt werden, die auch jeweils getrennt an die. Träger des Kontainers angefügt werden können und so die Lücken zwischen der ebenen Fläche und den Kontainerträgern ausfüllen. In diesem Fall wird die Ladeplatte ein Zubehörteil, ein Anbauelement des Kontainers.

Offensichtlich kann die erfindungsgemäße Anlage optimal in dem Falle ausgenutzt werden, wenn die Eisenbahnwagen, die Kraftfahrzeuge und die Bahnhöfe einheitlich mit diesen Anlagen ausgestattet sind. Da aber dies - insbesondere zu Anfang - nicht verwirklicht werden kann bzw. wegen der Betriebssicherheit die Montage an den Fahrzeugen nicht zu empfehlen ist, erscheint es zweckdienlich, zusätzliche Einheiten zu verwenden, die die vorstehen beschriebenen Rollenbahnen ersetzen.

Die Fig. 13 und 14 zeigen derartige sogenannte rollenbestückte Ladeplatten. Ihr wesentliches Merkmal besteht darin, daß anstelle der auf dem Perron oder dem Fahrzeug bzw. auf der Plattform des Eisenbahnwagens fix und endgültig montierten Rollenbahnen selbständige, bewegliche rollenbestückte Ladeplatten eingesetzt werden. In diesem Falle ist es zweckdienllch, an den Pritschen/Plattformen der Fahrzeuge Träger zu montieren, die während des Transports die Kontainer tragen. Zwischen diesen Trägern können die rollenbestückten Ladeplatten eingesetzt werden, die die Aufgaben der in den Fig. 6-10 dargestellten Rollenbahnen versehen.

Die in den Fig. 13 und 14 dargestellten rollenbestückten Ladeplatten 29 bestehen aus der Grundplatte 30 und den Rollen 31. Die Grundplatten 30 haben eine ebene untere Fläche bzw. eine ebene untere Hüllfläche und die durch die Rollen 31 gebildeten Rollenbahnen können angehoben bzw. abgesenkt werden. So kann nach Hineinschieben der rollenbestückten Ladeplatte unter den durch das Fahrzeug transportierten Kontainer dieser nach Anheben der Rollenbahnen von der Fahrzeugplattform hinuntergerollt und hiernach die ganze rollenbeestückte Ladeplatte von dem Fahrzeug abgehoben werden.

Gleiche rollenbestückte Ladeplatten können auch in die Randzonen der Verladeräume eingebaut werden, die - wie bereits gesagt - gegebenenfalls nur mit zum Rampenrand senkrechten Rollenbahnen ausgerüstet sind. Ein Teil dieser Rollenbahnen kann als rollenbestückte Ladeplatte in zur Rampe senkrechter Richtung auf die Plattform bzw. Pritsche der neben der Rampe stehenden Fahrzeuge hinausgeschoben werden.

Nach einere anderen möglichen Variante kann die rollenbestückte Ladeplatte so in den Rand der Kontainerrangierfläche bzw. der Rampe eingebaut werden, daß sie daraus automatisch ausladend auf der Plattform bzw. Pritsche der Fahrzeuge aufliegt und die vorstehend beschriebenen Aufgaben versieht, wonach sie dann automatisch unter die Rampe bzw. die Verladefläche zurückgezogen werden kann.

Aus den angeführten Beispielen ist gut zu ersehen, daß die erfindungsgemäße Anlage über zahlreiche Vorteile verfügt. Die wichtigsten untere ihnen sind folgende:
Während bei den derzeitigen Formen des herkömmlichen Warenverladens, -Rangierens und -Umschlages die Güter auf einer passiven Bahn (Straße, Platz, Verladefläche usw,) mit Hilfe von Karren, Wagen, Kränen usw. bewegt werden, gelangt bei dem erfindungsgemäßen System eine aktive Bahn zur Anwendung, wodurch einerseits die zum Rangieren eingesetzten Transporteinrichtungen entfallen können und der zum Rangieren bzw. Umordnen erforderliche Platzbedarf grundlegend vermindert wird, da dazu leere Räume überhaupt nicht oder kaum benötigt werden, andererseits eine vollkommene Automatisierung bzw. die rechnergestützte Verfolgung, Evidenzhaltung und Anzeige sowie Lenkung der Güter ermöglicht wird.

Im Falle einer Verwendung bei der Eisenbahn ergibt sich durch Einbau eines Rollenfeldes zwischen das Güterwagen-Untergestell und den Kasten die Möglichkeit dazu, den Kasten mit dem Ladegut zusammen von dem Laufwerk abheben zu können. Dadurch kann eine Verkürzung der Stillstandszeiten des Laufwerkes und des Untergestells d.h. eine bessere Ausnützung des teuren Laufwerkes erzielt werden. Auch das Problem des Be- und Entladens der Eisenbahnwagen wird einfacher. Im Falle von austauschbaren Güterwagenkästen wird auch das Problem des Entladens auf offenen Gleisen einfacher.

Mit dem Bau von Rangierräumen bestehend aus Rollenfeldern anstelle der derzeitigen Ranglerbahnhöfe mit Ablaufbergen wird auch das Verschieben bzw. Ordnen der Güterwagen einfacher. Der Platzbedarf von rollenbestückten Rangierräumen ist wesentlich kleiner als der der derzeitigen mit Ablaufbergen arbeitenden Rangierbahnhöfe.

Die neuartige Konstruktion kann weitläufig - im gleichen System - eingesetzt und auch mit den derzeitigen Verladetechnologien zusammen verwendet werden. Im Falle eines Bedarfes an hohen Verladeleistungen arbeitet sie im Falle einer automatisierten programmierten Ausführung außerordentlich schnell und erspart durch zeitgemäße Technologie auch lebendige Arbeit und Arbeitsflächen.

Ein besonderer Vorteil der Erfindungs besteht darin, daß die auf einen ganzen Zug zu verladenden Kontainer am Rand des Verladeraumes gesammelt und gleichzeitig auf den an der Rampe stehenden Zug geschoben werden können. Gegebenenfalls kann der Verladeraum an beiden Seiten des Gleises ausgebildet werden, wobei das Verladen von beiden Seiten des Gleises z.B. auf die Weise erfolgen kann, daß man von der einen Seite die bereits zusammengestellte Kontainerreihe auf den Zug schiebt und mit dem gleichen Arbeitsgang die auf dem Zug befindlichen Kontainer auf die andere Seite hinausschiebt.

Der zur Bewegung der Güter erforderliche Energiebedarf kann niedriggehalten und das Verladen preiswert durchgeführt werden. Natürlich kann das erfindungsgemäße System nicht nur im Falle von Fahrzeugen und Maschinen, sondern auch im Falle von kleineren Einheitsladungen gut eingesetzt werden.

Das erfindungsgmäße System kann harmonisch an die Intensität und Teohnologie der Kontainerbewegungen der verschiedenen Handhabungs- bzw. Abfertigungsstellen angepaßt werden. Durch die Sicherstellung einer einfachen und schnellen Möglichkeit der Kontainerhandhabung und Abfertigung werden die Umlaufzeiten der Kontainer und der Kontainertransportfahrzeuge vermindert und gleichzeitig ihr Ausnutzungsgrad erhöht. Durch Sicherstellung der Parallelität der verschiedenen Kontainerbewegungselemente wird die Schaffung großer Transportkapazitäten bzw. Transportleistungen möglich.

Das System bietet sehr gute Möglichkeiten zum Automatisieren der verschiedenen Kontainerbewegungsvorgänge. Die Kontainertransportfahrzeuge können - in den Zeiträumen - auch zur Erfüllung allgemeiner Transportaufgaben in Anspruch genommen werden, sodaß ihr Ausnutzungsgrad maximale Ausmaße annehmen kann.

Ein weiterer Vorteil des Systems besteht darin, daß die zugehörigen technischen Mittel und Einrichtungen einfach, ihr Betrieb wirtschaftlich, sparsam an Energie und lebendiger Arbeit sind und hierbei in verschiedenen Kombinatitonen elastisch an bereits bestehende Kontainertransportsysteme angeschlossen werden können, wobei eine allmähliche Umstellung auf das neue System problemlos gewährleistet werden kann.

Das System kann übrigens weitgehend die umfassende Anwendung und Verbreitung des außerordentlich rationellen Kontainerwarentransports und das Bewegen der nach internationalen Normen ausgebildeten Kontainer auf rollenbestückten Transportbahnen fördern. Durch entsprechende Kombination der erfindungsgemäßen Fahrzeuge und Bahnen bzw. Bahnelemente können den jeweiligen technischen Forderungen sich elastisch anpassende Systeme ausgebaut werden, die ein Bewegen der Kontainer in Längs- und Querrichtung, ihr Anheben und Verdrehen um ihre vertikale Achse, ihr aufprallfreies Aneinanderreihen und Klassieren ermöglichen.

Natürlich kann das System auch mit an sich bekannten herkömmlichen Mitteln (Kränen, Drehsscheiben, Schiebebühnen usw.) für den Kontainertransport kombiniert werden. Die erfindungsgemäßen rollenbestückten Förderbahnen und Transportfahrzeuge können nicht nur zum Transport von Kontainern, sondern auch zum Transport von anderen Ladegütern, z.B.in Kisten verpackten Waren, Behältern usw. verwendet werden. Die Erfindung beschränkt sich keineswegs auf die im vorstehenden beschriebenen Ausführungbeispiele, sondern kann innerhalb des durch die Ansprüche definiierten Schutzumfanges auf vielerlei Weise Verwirklicht werden.

So kann z.B. mit Hilfe des erfindungsgemäßen Systems eine Parkgarage gebaut werden, in der die Fahrzeuge mittels mit rollenbestückten Ladeplatten versehener Aufzüge in die einzelnen Etagen befördert werden, wo sie dann praktisch ohne freie Plätze oder mit Hilfe von nur einigen leeren Plätzen beliebig geordnet und zu jeder Zeit automatisch zum Aufzug gebracht werden können.

Auf ähnliche Weise können nach dem erfindungsgemäßen Prinzip Klassiere- und Ordnereinrichtungen für Warenhäuser oder sonstige Aufnahmen fertiggestellt werden.

In Fällen, in denen die zu bewegenden Objekte verhältnißmäßig klein und nicht allzu schwer sind, kann anstelle der Verminderung der Abmessungen der Rollenfelder ein Anordnen der die in verschiedenen Richtungen laufenden Rollen enthaltenden Felder ineinander erfolgen. Dies kann auf die in Fig. 14 dargestellte Weise so erfolgen, daß die in verschiedenen Richtungen liegenden Rollen nacheinander schachtafelartig und zwar auf die Weise angeordnet sind, daß die in der gleichen Richtung laufenden Rollen zusammen angetrieben bzw. angehoben und abgesenkt werden können. Dadurch sind praktisch auf die beschriebene Weise zwei Felder in einer einander überdeckenden Stellung angeordnet.

Natürlich kann über die dargelegten und angeführten Beispiele hinausgehend die Erfindung noch in zahlreichen Varianten verwirklicht werden.

## Patentansprüche

1. Anlage zum Bewegen und/oder Ordnen bzw. Rangieren von sperrigen Objekten bzw. Kontainern oder Fahrzeugen mit Hilfe von Rollen (6) bzw. Rollenbahnen, dadurch gekennzeichnet, daß die Rollen (6) in rechteckigen Feldern (5) in einer Weise angeordnet sind, daß die in den einzelnen Feldern (5) befindlichen Rollen (6) parallel zueinander, mit den in den benachbartn Feldern befindlichen Rollen hingegen einen Winkel einschließend angeordnet sind und die einzelnen Felder (5) in senkrechter Richtung beweglich ausgebildet sind.

2. Anlage nach Anspruch 1, dadurch gekennzeichnet, daß die in den benachbarten Feldern (5) befindlichen Rollen (6) senkrecht zueinander angeordnet sind.

3. Anlage nach Anspruch 1 bzw. 2, dadurch gekennzeichnet, daß die in den einzelnen Feldern (5) befindlichen Rollen (6) zumindest zum Teil angetrieben Rollen sind.

4. Anlage nach Anspruch 3, dadurch gekennzeichnet, daß jede der angetriebenen Rollen mit einem selbständigen Antrieb versehen ist.

5. Anlage nach Anspruch 3, dadurch gekennzeichnet, daß die innerhalb der einzelnen Felder befindlichen angetriebenen Rollen mit einem gemeinsamen Antrieb versehen sind.

6. Anlage nach Anspruch 5, dadurch gekennzeichnet, daß die Rollen mit einem Kettenantrieb versehen sind.

7. Anlage nach einem der Ansprüche 1-6, dadurch gekennzeichnet, daß die die in verschiedenen Richtungen angeordneten Rollen enthaltenden Felder nebeneinander angeordnet sind.

8. Anlage nach einom der Ansprüche 1-6, dadurch gekennzeichnet, daß die die in verschiedenen Richtungen angeordneten Rollen enthaltenden Felder ineinander angeordnet sind.

9. Anlage nach einem der Ansprüche 1-8, dadurch gekennzeichnet, daß die Felder mit Leit- und/oder Anschlagelementen versehen sind.

10. Anlage nach einem der Ansprüohe 1-8, dadurch gekennzeichnet, daß sie als Rangierbahnhof ausgebildet ist.

11. Anlage nach Anspruch 10, dadurch gekennzeichnet, daß der Rangierbahnhof aus einem straßenseitigem Verladeraum, aus einem eisenbahnseitigem Verladeraum sowie aus einem Rangierraum und Ablagerungsraum besteht.

12. Anlage nach Anspruch 10, dadurch gekennzeichnet, daß am Rand der Verladeräume ausschließlich zur Rampe parallele Achslinien aufweisende Rollenbahnen vorgesehen sind.

13. Anlage nach Anspruch 12, dadurch gekennzeichnet, daß zumindest ein Teil der zur Rampe parallele Achslinien aufweisenden Rollenbahnen in senkrechter Richtung zur Rampe ausladend herausgeschoben werden kann.

14. Anlage nach einem der Ansprüche 1-13, dadurch gekennzeichnet, daß sie als Kraftfahrzeugparkplatz ausgebildet ist.

15. Anlage nach einem der Ansprüche 1-14, dadurch gekennzeichnet, daß sie mit zusätzlichen Zuleit- bzw. Ableitrollenbahnen versehen ist.

16. Anlage nach Anspruch 15, dadurch gekennzeichnet, daß die Rollenbahnen auf einer Rampe angeordnet sind.

17. Anlage nach Anspruch 16, dadurch gekennzeichnet, daß die Rollenbahnen unter den auf der Rampe befindlichen Feldern herausschiebbar und in senkrechter Richtung verstellbar angeordnet sind.

18. Anlage nach Anspruch 16, dadurch gekennzeichnet, daß die Rollenbahnen auf einer Fahrzeugpritsche bzw. Plattform angeordnet sind.

19. Anlage nach Anspruch 18, dadurch gekennzeichnet, daß die Rollenbahnen auf einer Ladeplatte mit ebener unterer Hüllfläche angeordnet sind.

20. Anlage nach einem der Ansprüche 1-19, dadurch gekennzeichnet, daß sie mit einer rechnergestützten Steuerung versehen ist.

21. Anlage nach einem der Ansprüche 1-20, dadurch gekennzeichnet, daß sie mit einem rechnergestützten Registersystem versehen ist.

## Claims

1. Installation for moving and/or arranging or switching bulky objects or containers or vehicles, respectively, by means of rollers (6) or roller paths, characterised in that the rollers (6) are arranged in rectangular fields (5) such that the rollers (6) provided within the individual fields (5) are disposed parallel to each other while including an angle with the rollers disposed in the adjacent fields, and that the individual fields are adapted to be vertically moveable.

2. Installation according to claim 1, characterised in that the rollers (6) disposed in the adjacent fields (5) are arranged orthogonal to each other.

3. Installation according to claim 1 or 2, characterised in that at least part of the rollers (6) disposed in the individual fields (5) are driven rollers.

4. Installation according to claim 3, characterised in that each of the driven rollers is provided with an independent driving means.

5. Installation according to claim 3, characterised in that the driven rollers disposed within an individual field are provided with a common drive means.

6. Installation according to claim 5, characterised in that the rollers are provided with a chain drive.

7. Installation according to any of claims 1 to 6, characterised in that the fields containing the rollers disposed in different directions are arranged side by side.

8. Installation according to any of claims 1 to 6, characterised in that the fields containing the rollers disposed in different directions are arranged one within the other.

9. Installation according to any of claims 1 to 8, characterised in that the fields are provided with guide and/or stop elements.

10. Installation according to any of claims 1 to 8, characterised in that it is formed as a switch yard.

11. Installation according to claim 10, characterised in that the switch yard consists of a loading area for connection to the road, a loading area for connection to the railway, as well as a switching area and a storage area.

12. Installation according to claim 10, characterised in that the edges of the loading areas are provided exclusively with roller paths comprising axles parallel to the ramp.

13. Installation according to claim 12, characterised in that at least part of the roller paths having axles parallel to the ramp can be pushed out perpendicularly to the ramp in a projecting manner.

14. Installation according to any of claims 1 to 13, characterised in that it is formed as a motor vehicle parking area.

15. Installation according to any of claims 1 to 14, characterised in that it is provided with additional supply or discharge roller paths.

16. Installation according to claim 15, characterised in that the roller paths are arranged on a ramp.

17. Installation according to claim 16, characterised in that the roller paths are adapted to be pushed out from below the fields under the ramp and to be adjusted in the vertical direction.

18. Installation according to claim 16, characterised in that the roller paths are arranged on a vehicle flatbed or platform.

19. Installation according to claim 18, characterised in that the roller paths are arranged on a loading plate having a plain lower envelope.

20. Installation according to any of claims 1 to 19, characterised in that it is provided with a computer-based control means.

21. Installation according to any of claims 1 to 20, characterised in that it is provided with a computer-based registry system.

## Revendications

1. Installation pour déplacer et/ou arranger ou manoeuvrer des objets volumineux ou des conteneurs ou des véhicules, respectivement, au moyen de rouleaux (6) ou transrouleurs, caractérisée en ce que les rouleaux (6) sont arrangés dans des panneaux (5) rectangulaires de sorte que les rouleaux (6) pourvus à l'intérieur des panneaux (5) individuels soient disposés parallèles les uns des autres tandis qu'ils incluent un angle avec les rouleaux (6) disposés dans les panneaux (5) voisins, et que les panneaux (5) individuels sont formés de manière à être mobiles en direction verticale.

2. Installation selon la revendication 1, caractérisée en ce que les rouleaux (6) disposés dans les panneaux (5) voisins sont arrangés perpendiculaires les uns des autres.

3. Installation selon la revendication 1 ou 2, caractérisée en ce qu'au moins une partie des rouleaux (6) disposés dans les panneaux (5) individuels sont des rouleaux entraînés.

4. Installation selon la revendication 3, caractérisée en ce que chacun des rouleaux entraînés est équipé d'un moyen d'entraînement indépendant.

5. Installation selon la revendication 3, caractérisée en ce que les rouleaux entraînés disposés à l'intérieur d'un panneau individuel sont équipés d'un moyen d'entraînement commun.

6. Installation selon la revendication 5, caractérisée en ce que les rouleaux sont équipés d'un entraînement à chaîne.

7. Installation selon l'une quelconque des revendications 1 à 6, caractérisée en ce que les panneaux contenant les rouleaux disposés en directions différentes sont arrangés les uns à côté des autres.

8. Installation selon l'une quelconque des revendications 1 à 6, caractérisée en ce que les panneaux contenant les rouleaux disposés en directions différentes sont arrangés les uns à l'intérieur des autres.

9. Installation selon l'une quelconque des revendications 1 à 8, caractérisée en ce que les panneaux sont équipés d'éléments de guidage et/ou stop.

10. Installation selon l'une quelconque des revendications 1 à 8, caractérisée en ce qu'elle est formée comme gare de manoeuvre.

11. Instàllation selon la revendication 10, caractérisée en ce que la gare de manoeuvre consiste d'une zone de chargement se reliant à la route, une zone de chargement se reliant au chemin de fer, ainsi que d'une zone de manoeuvre et d'une zone de stockage.

12. Installation selon la revendication 10, caractérisée en ce que le bord des zones de chargement n'est équipé que de transrouleurs comprenant des axes parallèles à la rampe.

13. Installation selon la revendication 12, caractérisée en ce qu'au moins une partie des transrouleurs comprenant des axes parallèles à la rampe peuvent être poussés perpendiculairement de la rampe de manière débordante.

14. Installation selon l'une quelconque des revendications 1 à 13, caractérisée en ce qu'elle est formée comme parc à voitures motorisées.

15. Installation selon l'une quelconque des revendications 1 à 14, caractérisée en ce qu'elle est équipée de transrouleurs d'amenage ou de décharge additionnels.

16. Installation selon la revendication 15, caractérisée en ce que les transrouleurs sont arrangés sur une rampe.

17. Installation selon la revendication 16, caractérisée en ce que les transrouleurs sont adaptés de manière à être poussés hors des panneaux au-dessous de la rampe et à être ajustés en direction verticale.

18. Installation selon la revendication 16, caractérisée en ce que les transrouleurs sont arrangés sur une carrosserie à plateforme d'un véhicule.

19. Installation selon la revendication 18, caractérisée en ce que les transrouleurs sont arrangés sur un plateau de chargement comprenant une enveloppe inférieure plate.

20. Installation selon l'une quelconque des revendications 1 à 19, caractérisée en ce qu'elle est équipée d'un moyen de contrôle basé sur un ordinateur.

21. Installation selon l'une quelconque des revendications 1 à 20, caractérisée en ce qu'elle est équipée d'un moyen d'enregistrement basé sur un ordinateur.
